(19) Europäisches Patentamt

European Patent Office

Office européen des brevets

(11) **EP 0 940 677 B1**

(12) **EUROPEAN PATENT SPECIFICATION**

(45) Date of publication and mention
of the grant of the patent:
**11.09.2002 Bulletin 2002/37**

(51) Int Cl.⁷: **G01N 31/12**

(21) Application number: **98830112.3**

(22) Date of filing: **04.03.1998**

(54) **A process and apparatus of elemental analysis**

Verfahren und Gerät zur elementaren Analyse

Procédé et dispositif d'analyse élémentaire

(84) Designated Contracting States:
**AT CH DE ES FR GB GR LI NL PT SE**

(43) Date of publication of application:
**08.09.1999 Bulletin 1999/36**

(73) Proprietor: **Thermo Finnigan Italia S.p.A.
20090 Rodano Milano (IT)**

(72) Inventors:
 • **Ragaglia, Luigi
 20060 Cassina De' Pecchi (MI) (IT)**
 • **Zilioli, Giacinto
 20063 Cernusco Sul Naviglio (MI) (IT)**
 • **Andreolini, Franca
 26854 Cornegliano Laudense (LO) (IT)**
 • **Krotz, Liliana Noemi
 26900 Lodi (IT)**

(74) Representative: **Gislon, Gabriele
Marietti, Gislon e Trupiano S.r.l.
Via Larga, 16
20122 Milano (IT)**

(56) References cited:
 **EP-A- 0 586 969 GB-A- 2 150 691**

 • **KIRSTEN W J ET AL: "Rapid and automatic
 determination of nitrogen using flash
 combustion of large samples" ANALYTICAL
 CHEMISTRY, vol. 58, no. 9, August 1986, US,
 ISSN 003-2700, pages 2109-2112, XP002073731**
 • **COLOMBO B ET AL: "Total automatic
 determination of nitrogen" INTERNATIONAL
 LABORATORY, vol. 12, no. 7, September 1982,
 US, ISSN 0010-2164, pages 76-84, XP002073732**

## Description

The present invention relates to a process and a device of elemental analysis of the Carbon, Hydrogen, Nitrogen, and Sulfur content by means of flash combustion in oxygen, and for the analysis of the Oxygen content by means of pyrolysis.

Various processes for elemental analysis by means of "flash combustion" of the sample are known. This technique provides for the introduction of the sample into a heated reactor vessel in the presence of oxygen so as to cause substantially instantaneous combustion of the same; the gases released are then analyzed.

One known process of analysis (used by LECO®-USA) provides for operation in a continuous flow of oxygen. The resulting gases are treated to ensure all combustion is complete and sent to a mixing tank where only a part is then analyzed. The main drawback of this solution is the large quantity of oxygen consumed; furthermore, the step of removal of a part of the combustion gases is a possible source of problems.

European Patent Application N. 0586969, in the name of the present applicant, describes an elemental analysis process to determine the total nitrogen content. According to this document, the flash combustion is carried out in a flow of helium, with the necessary oxygen being supplied from a loop. The loop must be kept constantly full, with consequent consumption of oxygen; furthermore the quantity of sample which can be analyzed depends on the volume of the oxygen loop.

Kirsten WJ et al "Rapid and automatic determination of nitrogen using flash combustion of large samples" Analytical Chemistry, August 1986, USA, ISSN 003-2700 Vol. 58, No. 9, pages 2109-2112 discloses a process of elemental analysis by means of flash combustion in an oxygen atmosphere, wherein a loop is used to feed the oxygen. This creates problems for exactly dosing the oxygen amount and requires sometimes a time-consuming substitution of the loop.

GB-A-2150691 discloses a system for analysing a sample wherein oxygen is supplied to the combustion reactor at a constant flow rate, but the oxygen flow is continuously injected into the system as a carrier gas for the analysis. This cannot be applied to an elemental analyser, which foresees a gas-chromatograph downstream the furnace, because the gas chromatograph requires to be fed by inert carrier gas.

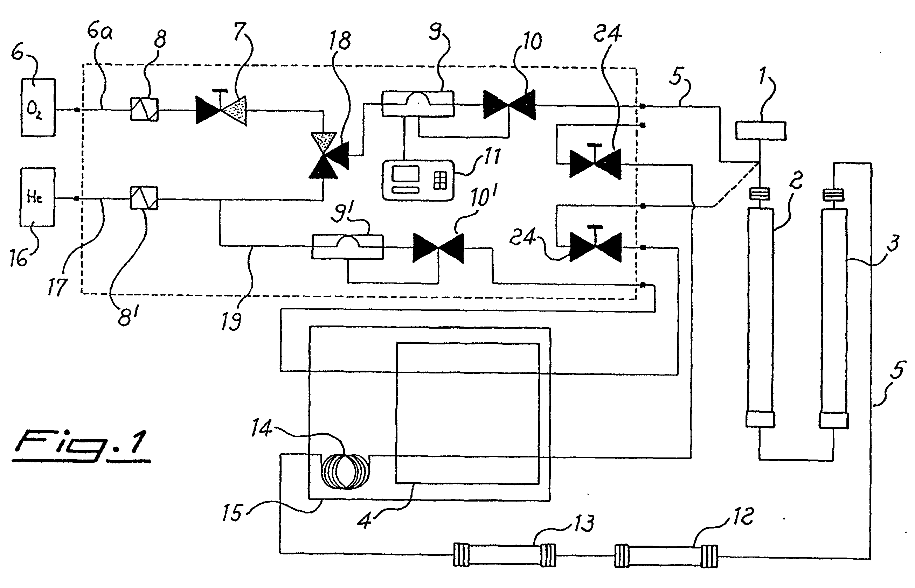

Colombo B et al: "Total automatic nitrogen determination" - International Laboratory, September 1982, USA, ISSN 0010-2164, Vol 12, No. 7, pages 76-84 discloses a nitrogen analyzer wherein the oxygen feeding means are not expressly specified, but in the drawing (Fig. 1) a loop is present

An aim of the present invention is to avoid the aforementioned drawbacks, and provide a process and a device for elemental analysis which is flexible and inexpensive, which reduces the volume of oxygen consumed to a minimum, and which can be applied without problems to samples varying widely in weight and substance.

Such aim is achieved by means of the present invention, which relates to a process for elemental analysis by means of flash combustion, characterized by according to claim 1.

According to a preferred aspect of the invention, the value $\Delta$ is determined experimentally for each type or class of sample in relation to their nature, and memorized in a means of retrieval and processing for use in the analysis.

According to a further aspect of the invention, the volume of oxygen required $Q_{O1}$ is determined by measuring the time $T_C$ required for the complete combustion of said pre-determined quantity of sample $Q_{C1}$. The flow-rate P of the oxygen fed to combustion reactor is measured, and the said value $T_C$ is multiplied by the said value P.

The invention relates furthermore to a device for flash elemental analysis, according to claim 7.

According to a preferential aspect of the invention, the device furthermore comprises a means of memorization and electronic processing in order to: memorize a plurality of constants $\Delta$ for a corresponding plurality of types of sample; memorize the algorithm [1]; receive the data related to the type and quantity of sample to be analyzed and calculate the said volume of oxygen $Q_O$ required for each analysis.

The invention has numerous advantages compared to the present state of the art. The advantages are of an economic, analytical and practical nature. The process of the invention allows the use of only that quantity of oxygen necessary to completely bum the sample, in slight excess. The daily consumption of oxygen for analyses has been found to be about one tenth of the consumption which would be used by traditional oxygen loop systems of analysis. A further advantage is that, as well as saving oxygen, there is also saving on reduced copper - necessary to reduce oxides - which now lasts longer. In practice it is possible to at least double the number of analyses obtained for the same quantity of reduced Cu used, compared to oxygen loop analysis.

The analytical advantages result from the greater efficiency of the copper which, not having to treat large quantities of analytical oxygen, remains unaltered over time.

From a practical point of view, the various $\Delta$ are established experimentally for a large number of samples of diverse type and nature and are memorized in a processor in the production step of the device. At the moment of analysis, the operator is only required to set the type and the weight of sample to obtain automatic delivery of the quantity of oxygen necessary to bum the sample. Only where the type of sample to be analyzed is not among those in memory or where the nature of the sample is unknown, does the operator proceed to establish the $\Delta$ and memorize it.

The invention will now be described in more detail with reference to the attached drawings which are by way of example and not limiting, in which:

- Fig. 1 is a layout of the device according to the invention prior to the introduction of the oxygen;
- Fig. 2 is a layout of the device of fig. 1, during the oxygen introduction step;
- Fig. 3 is a layout of an embodiment for CHNS-O analysis.

The device shown in fig. 1 comprises a sampler 1 (known per se in the art), an oxidation reactor 2, a reduction reactor 3 and a thermo-conductivity detector (TCD) 4, connected to each other by means of a line 5. Line 5 upstream of sampler 1 is connected to a source of oxygen 6 by means of line 6a and three-way valve 18. Beyond valve 18, between source of oxygen 6 and sampler 1 there are: a filter 8, an on/off valve 7, a flow detector 9 and a proportional valve 10 which is connected with flow detector 9 in such a way to form a flow regulator.

Flow detector 9 is furthermore connected with a means of calculation 11, consisting of an electronic processor, which allows the volume of oxygen required for analysis of a sample to be determined as a function of both its weight and type of material. As will be described below, the volume of oxygen necessary is calculated by means of the algorithm

$$Q_O = \Delta(Q_C) \qquad [1]$$

where $Q_O$ is the volume of oxygen required and $Q_C$ is the weight (known and measured) of the sample to be analyzed. $\Delta$ is a constant which depends on the type of material and which is determined experimentally.

Furthermore, the means of calculation 11 allow: a plurality of constants $\Delta$ to be memorized for a corresponding plurality of samples; the algorithm [1] to be memorized, the data related to the type and weight of the samples before analysis to be input, and the volume of oxygen required $Q_O$ for analysis of each single sample to be calculated.

Downstream of reduction reactor 3 there is a filter for CO2 12 and a filter for H2O 13 (optional), a column 14 and TCD detector 4. The column and detector are housed in an oven 15. The material with which the column is packed depends on the type of analysis to be done; e.g. Porapack ® is used for a CHN analysis; molecular sieves are used for analysis of oxygen, and activated carbon is used for analysis of N alone.

The device, or analysis apparatus, further comprises a source of helium 16 connected by line 17 to three-way valve 18 and via the same to analysis line 5. A filter 8' similar to filter 8 is located on line 17 upstream of valve 18. Line 17 has a branch 19 which extends through detector 4 and acts as a reference line.

The flow of helium along this line is controlled by flow detector 9' and by proportional valve 10 forming with flow detector 9' a flow regulator and at the outlet from line 19 is sent to sampler 1 to wash over the sample in the sampler.

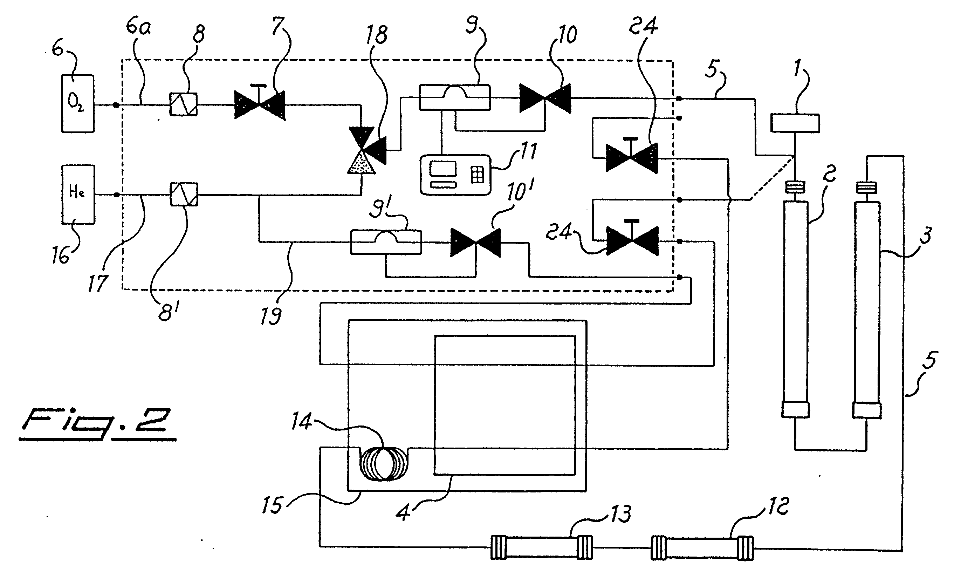

The two configurations of figs. 1 and 2 are structurally identical and show the "PreRun" step in fig. 1 i.e. the step in which He is fed to line 5; valve 7 is closed and three-way valve 18 connects the only source of source of helium 16 with analysis line 5. During the oxygen introduction step (fig. 2) valve 7 is open and valve 18 connects the source of oxygen 6 with line 5, only.

Lines 5 and 19 are furthermore provided with valves 24 close to their extremities; valves 24 are used to check the gas-seal of the system as described below.

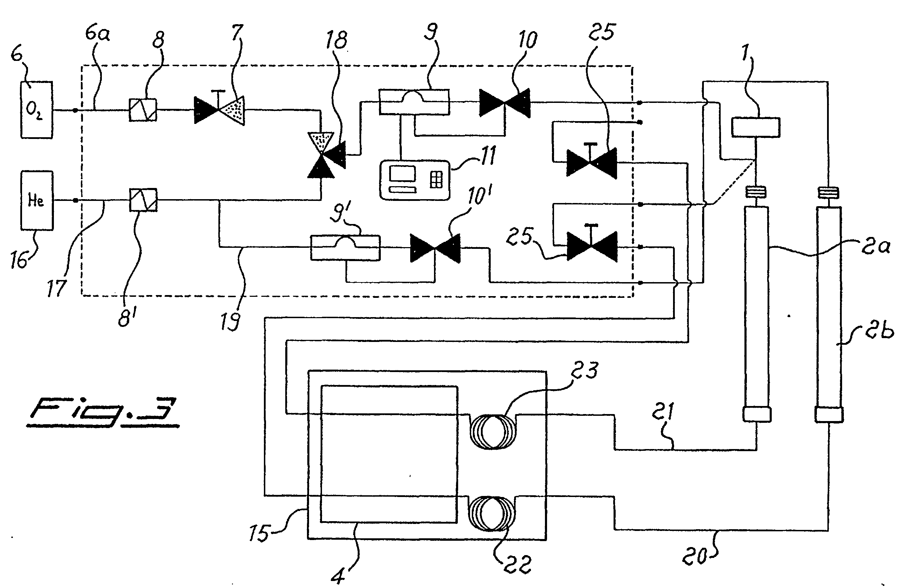

Fig. 3 shows an embodiment which allows to switch from analysis of CHNS to analysis of oxygen in a short time without substantial modifications to the instrument. In this device there are two reactors 2a and 2b, the first for analysis of CHNS and the second for the analysis of oxygen alone.

Two lines 20 and 21 extend from the two reactors to two columns 22 and 23 respectively, in oven 15, so as to give two independent analytical circuits. It is only necessary to shift sampler 1 (and line 5 connected to it) from one reactor to the other to switch from one type of analysis to the other. In one possible embodiment, an automatic sampler for CHNS on reactor 2a is combined with a manual sampler on reactor 2b for the determination of oxygen. Fig. 3 shows the "PreRun" configuration for the determination of CHNS. Two valves 25 with similar function to valves 24 of figs. 1 and 2 are located at the end of lines 20 and 21.

The device according to the invention operates in the following way:

the value $\Delta$ is initially determined experimentally for a series of different types of sample, e.g. cereals, cheese, meat, etc. Each $\Delta$ refers to a type of sample and is inserted into the memory of the means of calculation 11, i.e. the computer which controls the instrument.

The value $\Delta$ is calculated as follows: $\Delta = Q_{O1}/Q_{C1}$ where $Q_{O1}$ is the volume of oxygen necessary (and measured experimentally) for the complete combustion of the (known) quantity of sample $Q_{C1}$.

$Q_{O1}$ is obtained from the relation

$$Q_{O1} = T_C \, P$$

where $T_C$ is the time necessary (measured experimentally) for combustion of the quantity of sample $Q_{C1}$ and P is the flow-rate of oxygen sent to combustion reactor 2 or 2a, measured in cc/min. In other words, the time $T_C$ necessary for the combustion of the pre-determined quantity of sample $Q_{C1}$ is measured, then flow-rate P of the oxygen fed to the said combustion reactor is measured, and said value $T_C$ is multiplied by the value of P.

To measure the time $T_C$ a control cycle is carried out first with just the container in Sn: the container is placed in the reactor 2 and the oxygen is then fed in.

The time necessary for the oxygen to arrive at the reactor 2 is measured, observing the flash of the container when the oxygen reaches the reactor.

At this point the quantity $Q_{C1}$ of the chosen sample is weighed, e.g. 100 mg, and placed in the container and the maximum flow of oxygen is set, e.g. 300 cc/min for 1 minute. Knowing how long it takes for the oxygen to reach the reactor, the sample is introduced into the reactor just before or at the moment in which the oxygen reaches the reactor and the combustion time TC is measured by observing the point at which the burning is extinguished.

Assuming a combustion time TC of 0.5 minutes, the calculation of the volume of oxygen $Q_{O1}$ necessary for the sample $Q_{C1}$ is:

$$(0.5 \text{ min}) \times (300 \text{ cc/min}) = 150 \text{ cc} = Q_{O1}.$$

And therefore

$$\Delta = Q_{O1}/Q_{C1} = 150 \text{ cc}/100 \text{ mg} = 1.5 \text{ cc/mg}$$

This value of $\Delta$ is used for all the classes of the related type of samples and is used to determine the volume of oxygen necessary for successive samples of the same type; e.g. if the sample to be analyzed weighs 200 mg, the volume of oxygen is $Q_O = \Delta\, Q_C = (1.5 \text{ cc/mg}) \times 200 \text{ mg} = 300 \text{ cc}$.

As mentioned above, $\Delta$ values for a large quantity of types of product to be analyzed are already established and inserted into the memory of the processor 11 in the production step of the device of the invention. When the operator carries out the analysis of a sample, initially he sets the type of product to be analyzed, then the weight of the sample (or samples to be analyzed in sequence) is also set into processor 11. The processor identifies the $\Delta$ characteristic of the type of product and calculates the individual quantity of oxygen necessary for analysis of each sample according to the algorithm

During the step preceding combustion of the sample (PreRun) helium is fed to the inlet of line 17 at a working pressure of 350-400 kPa, it flows along line 5 and is controlled by flow regulator 9 at a flow-rate between 0 and 300 cc/min according to the analytical configuration. The flow of helium passes through reactors 2 and 3, filters 12 and 13, if present, column 14 and detector 4. Similarly, helium flows along line 19 where it is controlled by flow regulator 9' between 0 and 300 cc/min (generally at 70-80 cc/min) and then flows through detector 4 and washes over sampler 1.

Valve 7 is closed and the oxygen is not fed.

When the operator sends the signal to begin the analysis cycle, valve 7 opens and valve 18 is set for feeding only oxygen to analysis line 5. The quantity of oxygen necessary for each analysis is determined by means of calculation 11 as previously described and is controlled by means of flow detector 9 and proportional valve 10. The sample is introduced some seconds after the signal to begin the analysis cycle is given; the operator can set the time of introduction of the sample.

The gases generated by the combustion of the sample are treated in a way already known in the art. At the end of the oxygen introduction step the valves are switched again to the position for feeding helium, as described above.

The valves 24 and 25 are used to check that the pneumatic system is gas-tight. To do this, helium is fed to lines 5 and 19, or 19 and 20 or 21, and valves 24 and 25 are closed; if the system is gas-tight, the flow of helium measured by flow detector 9', 10' falls substantially to zero within a pre-determined time; where it does not, there are leaks of some kind in the pneumatic system.

A series of analysis of the nitrogen content of samples was carried out to check the validity of the process according to the present invention.

The samples used are Standard Reference Material #1547 (peach leaves) obtainable from National Institute of Standard & Technology - US Department of Commerce. The certified value of nitrogen content of these samples is 2,94% ± 0,12.

After obtaining the $\Delta$, seven analysis of samples with increasing weight were carried out; the results are set out in the following table:

TABLE 1

| sample weight (g) | % nitrogen |
|---|---|
| 0,102 | 2,94 |
| 0,156 | 2,94 |
| 0,204 | 2,97 |
| 0,253 | 2,96 |
| 0,303 | 2,95 |
| 0,351 | 2,97 |
| 0,402 | 2,97 |

**Claims**

1. A process of elemental analysis by means of flash combustion in an oxygen atmosphere in a combustion reactor (2) of an elemental analysis device, **characterized by** comprising the following steps:

   - determining the volume of oxygen required for the analysis as a function of the sample to be analyzed, by means of the following algorithm:

$$Q_0 = \Delta(Q_C) \qquad [1]$$

where:

Q_0 is the volume of oxygen required, $Q_C$ is the weight of the sample to be analyzed and $\Delta = Q_{01}/Q_{C1}$,

where $Q_{01}$ is the volume of oxygen required for the combustion of a pre-determined quantity $Q_{C1}$ of the sample to be analyzed, said $\Delta$ being a characteristic value of the type of samples to be analyzed;

- **switching off the flow of inert carrier to the combustion reactor;**
- **supplying the required amount of oxygen by connecting the combustion reactor (2) to a source of oxygen (6) by means of a flow regulator (9, 10); and**
- **restoring the flow of inert carrier to the combustion reactor at the end of the oxygen introduction step;**
- **thereby** feeding in pulse mode the said volume of oxygen $Q_0$ to said combustion reactor (2).

2. A process according to Claim 1, further comprising the steps of obtaining a plurality of constants $\Delta$ for a corresponding plurality of types of sample, memorizing the related data in electronic means of memorization and elaboration (11) and memorizing the algorithm [1] in said electronic means (11).

3. A process according to Claim 1 o 2, wherein the step of determining the required oxygen volume $Q_{O1}$ comprises the following steps: measuring the time $T_C$ required for the combustion of the said pre-determined quantity of sample $Q_{C1}$, measuring the flow-rate P of the oxygen fed to the said combustion reactor, and multiplying the said value $T_C$ by the value of the flow-rate P.

4. A process according to any previous Claim, wherein said flow of oxygen is constant during the combustion step of the sample.

5. A process according to any Claim 2 to 4, further comprising the following steps: inputting data into said electronic means (11) related to type and quantity of the sample to be analyzed; retrieving from said electronic means the values of $\Delta$ required; and calculating the said volume of oxygen required for each analysis $Q_C$.

6. A process according to any previous Claim, in which a flow of inert carrier is fed to the analysis device before and after an oxygen pulse-feeding step, wherein a flow of said carrier is fed to a reference branch (19) of the said device.

7. A device for flash combustion elemental analysis comprising: a combustion reactor (2), means for supplying a flow of inert carrier, and means for pulse-feeding oxygen to said reactor (2), **characterized in that** said means for feeding oxygen comprises **valve means (18) for disconnecting the combustion reactor from the flow of inert carrier and** connecting said reactor to a source of oxygen (6) **via** a flow regulator (9, 10) on a feed line (5,6a), and means of determining the volume of oxygen required for analysis of the sample by means of the following algorithm:

$$Q_0 = \Delta(Q_C) \qquad [1]$$

where $Q_0$ is the volume of oxygen required, $Q_C$ is the weight of the sample to be analyzed and $\Delta = Q_{01}/Q_{C1}$, where $Q_{01}$ is the volume of oxygen required for the combustion of a pre-determined quantity $Q_{C1}$ of the sample to be analyzed.

8. A device according to Claim 7, further comprising electronic means of memorization and elaboration (11) for: memorizing a plurality of constants a for a corresponding plurality of types of samples, memorizing the algorithm [1]; receiving the data related to the type and the quantity of sample to be analyzed and calculating the said volume of oxygen $Q_0$ required for each analysis.

9. A device according to Claim 8 wherein said flow regulator (9) is connected with a proportional valve (10) and with said means of memorization and elaboration (11).

10. A device according to Claim 8 or 9, further comprising a source of inert carrier (16), and means (17,18) for feeding said carrier to said combustion reactor (2) and to a reference line (19) dedicated to the carrier alone.

**Patentansprüche**

1. Verfahren zur Elementaranalyse mittels Schnellverbrennung in einer Sauerstoff-Atmosphäre in einem Verbrennungsreaktor (2) einer Elementaranalysenvorrichtung, **dadurch gekennzeichnet, daß** es die folgenden Schritte umfaßt:

- Bestimmen des zur Analyse erforderlichen Sauerstoffvolumens als Funktion der zu analysierenden Probe mit Hilfe des folgenden Algorithmus:

$$Q_O = \Delta(Q_C) \qquad [1]$$

worin:

Q_O das erforderliche Sauerstoffvolumen ist, $Q_C$ das Gewicht der zu analysierenden Probe ist, und $\Delta = Q_{O1}/Q_{C1}$ ist,

worin $Q_{O1}$ das zur Verbrennung einer vorbestimmten Menge $Q_{C1}$ der zu analysierenden Probe erforderliche Sauerstoffvolumen ist, wobei $\Delta$ eine Kenngröße für die zu analysierende Probenart ist;

- Abschalten des Stroms des inerten Trägers zum Verbrennungsreaktor;

- Zuführen der erforderlichen Menge Sauerstoff durch Anschließen des Verbrennungsreaktors (2) an eine Sauerstoffquelle (6) mit Hilfe eines Durchflußreglers (9, 10); und

- Wiederherstellen des Stroms des inerten Trägers zum Verbrennungsreaktor am Ende des Schritts der Sauerstoffzufuhr;

wodurch das Sauerstoffvolumen $Q_O$ dem Verbrennungsreaktor (2) pulsweise zugeführt wird.

2. Verfahren nach Anspruch 1, des weiteren umfassend die Schritte: Erhalten mehrerer Konstanten $\Delta$ für entsprechend mehrere Probenarten, Speichern der betreffenden Daten in einer elektronischen Speicher- und Verarbeitungseinrichtung (11) und Speichern des Algorithmus [1] in der elektronischen Einrichtung (11).

3. Verfahren nach Anspruch 1 oder 2, wobei der Schritt der Bestimmung des erforderlichen Sauerstoffvolumens $Q_{O1}$ die folgenden Schritte umfaßt: Messen der Zeit $T_C$, die zur Verbrennung der vorbestimmten Probenmenge $Q_{C1}$ erforderlich ist, Messen der Strömungsgeschwindigkeit P des dem Verbrennungsreaktor zugeführten Sauerstoffs, und Multiplizieren des Werts $T_C$ mit dem Wert der Strömungsgeschwindigkeit P.

4. Verfahren nach einem der vorstehenden Ansprüche, wobei der Sauerstoffstrom während des Schritts der Verbrennung der Probe konstant ist.

5. Verfahren nach einem der Ansprüche 2 bis 4, des weiteren umfassend die folgenden Schritte: Eingeben von Daten in die elektronische Einrichtung (11), die sich auf Art und Menge der zu analysierenden Probe beziehen; Abrufen der erforderlichen $\Delta$-Werte aus der elektronischem Einrichtung; und Berechnen des für die jeweilige Analyse $Q_C$ erforderlichen Sauerstoffvolumens.

6. Verfahren nach einem der vorstehenden Ansprüche, wobei der Analysenvorrichtung vor und nach einem Schritt pulsweiser Sauerstoffzufuhr ein Stroms eines inerten Trägers zugeführt wird, wobei ein Strom des Trägers einem Bezugszweig (19) der Vorrichtung zugeführt wird.

7. Vorrichtung zur Schnellverbrennungselementaranalyse, umfassend: einen Verbrennungsreaktor (2), eine Einrichtung zum Zuführen eines Stroms eines inerten Trägers sowie eine Einrichtung zum pulsweisen Zuführen von Sauerstoff in den Reaktor (2), **dadurch gekennzeichnet, daß** die Einrichtung für die Sauerstoffzufuhr eine Ventileinrichtung (18) zum Trennen des Verbrennungsreaktors vom Strom des inerten Trägers und zum Anschließen des Reaktors an eine Sauerstoffquelle (6) über einen Durchflußregler (9, 10) an einer Zuleitung (5, 6a) sowie eine Einrichtung zur Bestimmung des zur Analyse der Probe erforderlichen Sauerstoffvolumens mit Hilfe des folgenden Algorithmus umfaßt:

$$Q_O = \Delta(Q_C) \qquad [1]$$

worin:

Q_O das erforderliche Sauerstoffvolumen ist, $Q_C$ das Gewicht der zu analysierenden Probe ist, und $\Delta = Q_{O1}/Q_{C1}$ ist,

worin $Q_{O1}$ das zur Verbrennung einer vorbestimmten Menge $Q_{C1}$ der zu analysierenden Probe erforderliche Sauerstoffvolumen ist.

8. Vorrichtung nach Anspruch 7, des weiteren umfassend eine elektronische Speicher- und Verarbeitungseinrichtung (11) zum Speichern mehrerer Konstanten $\Delta$ für entsprechend mehrere Probenarten, zum Speichern des Algorithmus [1]; zur Aufnahme von Daten, die sich auf Art und Menge der zu analysierenden Probe beziehen, und zum Berechnen des für die jeweilige Analyse erforderlichen Sauerstoffvolumens $Q_O$.

9. Vorrichtung nach Anspruch 8, wobei der Durchflußregler (9) an ein Proportionalventil (10) und an die Speicher- und Verarbeitungseinrichtung (11) angeschlossen ist.

10. Vorrichtung nach Anspruch 8 oder 9, des weiteren umfassend eine Quelle für den inerten Träger (16) und eine Einrichtung (17, 18) für die Zufuhr des Trägers zum Verbrennungsreaktor (2) und zu einer Bezugsleitung (19), die ausschließlich dem Träger vorbehalten ist.

## Revendications

1. Procédé d'analyse élémentaire au moyen de combustion rapide dans une atmosphère d'oxygène dans un réacteur de combustion (2) d'un dispositif d'analyse élémentaire, **caractérisé en ce qu'**il comprend les étapes suivantes consistant à :

   déterminer le volume d'oxygène requis pour l'analyse en fonction de l'échantillon à analyser, au moyen de l'algorithme :

   $$Q_O = \Delta(Q_C) \qquad [1]$$

   où :

   $Q_O$ est le volume d'oxygène requis, $Q_C$ est le poids de l'échantillon à analyser et $\Delta = Q_{O1}/Q_{C1}$ ;
   où $Q_{O1}$ est le volume d'oxygène requis pour la combustion d'une quantité prédéterminée $Q_{C1}$ de l'échantillon à analyser, ledit $\Delta$ étant une valeur caractéristique du type d'échantillon à analyser ;

   fermer la circulation de véhicule inerte dans le réacteur de combustion ;
   fournir la quantité d'oxygène requise en connectant le réacteur de combustion (2) à une source d'oxygène (6) au moyen d'un régulateur de débit (9, 10) ; et
   rétablir la circulation de véhicule inerte dans le réacteur de combustion à la fin de l'étape d'introduction d'oxygène ;
   de manière à charger en mode pulsé ledit volume d'oxygène $Q_O$ dans ledit réacteur de combustion (2).

2. Procédé selon la revendication 1, comprenant également les étapes consistant à obtenir une pluralité de constantes $\Delta$ pour une pluralité correspondante de types d'échantillon, mémoriser les données associées dans un moyen de mémorisation et de détermination électronique (11) et mémoriser l'algorithme [1] dans ledit moyen électronique (11).

3. Procédé selon la revendication 1 ou 2, dans lequel l'étape consistant à déterminer le volume d'oxygène requis $Q_{O1}$ comprend les étapes consistant à :

mesurer le temps $T_O$ requis pour la combustion de ladite quantité prédéterminée d'échantillon $Q_{C1}$, mesurer le débit P de l'oxygène chargé dans ledit réacteur de combustion, et multiplier ladite valeur $T_C$ par la valeur du débit P.

4. Procédé selon l'une quelconque des revendications précédentes, dans lequel ledit débit d'oxygène est constant pendant l'étape de combustion de l'échantillon.

5. Procédé selon la revendication 2 ou 4, comprenant également les étapes suivantes consistant à : entrer des données dans ledit moyen électronique (11) concernant le type et la quantité d'échantillon à analyser ; extraire dudit moyen électronique les valeurs de $\Delta$ requises ; et calculer ledit volume d'oxygène requis pour chaque analyse $Q_C$.

6. Procédé selon l'une quelconque des revendications précédentes, dans lequel un flux de véhicule inerte est chargé dans le dispositif d'analyse avant et après une étape de chargement pulsé d'oxygène, dans lequel un flux dudit véhicule est chargé dans une dérivation de référence (19) dudit dispositif.

7. Dispositif pour l'analyse élémentaire par combustion rapide comprenant : un réacteur de combustion (2), un moyen pour fournir un flux de véhicule inerte, et un moyen pour le chargement pulsé d'oxygène dans ledit réacteur (2), **caractérisé en ce que** ledit moyen pour charger l'oxygène comprend un moyen formant vanne (18) pour déconnecter le réacteur de combustion de la circulation de véhicule inerte et connecter ledit réacteur à une source d'oxygène (8) par l'intermédiaire d'un régulateur de débit (9, 10) sur une voie de chargement (5, 6a), et un moyen pour déterminer le volume d'oxygène requis pour l'analyse de l'échantillon au moyen de l'algorithme suivant :

   $$Q_O = \Delta(Q_C) \qquad [1]$$

   où :

   $Q_O$ est le volume d'oxygène requis, $Q_C$ est le poids de l'échantillon à analyser et $\Delta = Q_{O1}/Q_{C1}$ ;

   où $Q_{O1}$ est le volume d'oxygène requis pour la combustion dune quantité prédéterminée $Q_{C1}$ de l'échantillon à analyser.

8. Dispositif selon la revendication 7, comprenant également un moyen électronique de mémorisation et de détermination (11) pour mémoriser une pluralité de constantes Δ pour une pluralité correspondante de types d'échantillon, mémoriser l'algorithme [1] ; recevoir les données concernant le type et la quantité d'échantillon à analyser et calculer ledit volume d'oxygène $Q_O$ requis pour chaque analyse.

9. Dispositif selon la revendication 8 dans lequel ledit régulateur de débit (9) est connecté à une vanne proportionnelle (10) et audit moyen de mémorisation et de détermination (11).

10. Dispositif selon la revendication 8 ou 9, comprenant également une source de véhicule inerte (16), et un moyen (17, 18) pour charger ledit véhicule dans ledit réacteur de combustion (2) et à une voie de référence (19) dédiée au véhicule seul.

Fig.1

EP 0 940 677 B1

Fig.2

Fig.3

EP 0 940 677 B1